# EUROPEAN PATENT APPLICATION

(11) **EP 1 989 959 A1**
(43) Date of publication of application: **12.11.2008**
(21) Application number: 08447004.6
(22) Date of filing: 05.02.2008
(51) Int. Cl.: A47B 96/20, B29C 51/16, B32B 5/10, B32B 5/26, B60R 13/02

(54) **A decorative curved laminated panel and the manufacturing thereof**

(30) Priority: 11.05.2007 BE 200700224; 31.10.2007 BE 200700523
(71) Applicant: Derommelaere, Myriam, 8830 Hooglede (BE)
(72) Inventor: Derommelaere, Myriam, 8830 Hooglede (BE)

(57) **Abstract**

A decorative curved layered panel(1) consisting of at least one fibrous core layer(2,3), top, bottom and optionally intermediate layers(4,5,6,7), provided with a pattern(8a) and optionally a relief structure(8), preferable matching with the pattern(8a) and a method for the manufacturing of such a panel by shaping the laminated structure(2,3,4,5,6,7) between the mould halves(13,13a) of a press mould(15,16).

## Description

### Field of the invention

The present invention concerns a decorative curved laminated panel, consisting of a fibrous core layer, covered by at least one outer layer, which is provided with a decorative pattern and optionally a relief structure.

Moreover, the invention concerns a method for the manufacturing of the aforementioned panel, comprising a number of successive steps.

Consequently, the invention comprises a press mould and a method for its manufacturing in order to fabricate the curved laminated panel.

### Background of the invention

Decorative curved laminated panels, meant by the invention, refer to panels consisting of multiple layers, curved and provided with a decorative pattern in at least one of the outer layers and optionally a relief structure corresponding with its pattern.
Such panels can be used, without any limitation, as linings for transporting vehicles and furniture.

However, it is already known in the state of the art to use decorative patterns in floor panels. Such a panel has been described in WO03006232, using a mechanical pressing technique. The base panel consists of MDF or HDF, one or more sheets of kraft paper, impregnated with selected resins, a decorative paper, made of cellulose, impregnated with a solution of melamine and one or more sheets of resistant paper. A decorative pattern is applied by pressing.

Laminated curved panels made by cold shaping are known according to EP1336471. EP1123672 describes a laminated structure made by a so-called plastic shaping technique.

In WO03006232 only flat panels are described, consisting of MDF or HDF. EP1336471 and EP1123672 teach the manufacturing of bent laminates without decorative pattern.

When curved panels are formed, a mismatch of the pattern according to the relief structure occurs due to deformation. The present invention offers a solution for this disadvantage. Hence, the invention describes a method for the manufacture of such a panel.

The thickness and the density of the panel can vary longitudinally as in its height due to its application, which creates a first advantage.

A second advantage is obtained by the core layers, cured with resins, which can be treated with fire-resistant and/or water-repellent compounds and according to its application, be rolled-up and cut.

Thirdly, the use of lightweight fibres enables to manufacture core layers, which could be applied as linings in aeroplanes.

Finally, the curved panels can be produced with very small bending radii.

### Summary of the invention

The invention concerns a decorative curved panel, consisting of at least one fibrous core layer, at least one top and one bottom layer, optionally intermediate layers and an applied pattern, which is optionally matched with a relief structure in those layers.

Moreover, the invention concerns a method for the manufacturing of the precedent panels, which comprises the following steps :
- Determining and shaping the fibrous core layer(s) according to the preferred dimensions
- Treating the top, bottom and intermediate layers
- Composing the several layers to a layered structure and curving it in a press mould between the mould halves
- Optionally a relief structure can be applied before or during the press process.
- Optionally an after treatment of the shaped panel can be applied

Regarding the manufacturing process of the decorative curved panel, a particular press mould will be implemented. The press mould is characterized by its particular curved and heated surface with the goal to deform the layered panel. When a relief structure should be applied according to a predetermined pattern, the press mould is treated with a laser scanner in order to configure the relief structure of at least one mould halve. This enables to configure the mould halves according to the needs of the user by computer software.

Another way to create the relief structure is to use a heated pressure roll with a predetermined pattern on the laminated structure before its shaping process.

### Brief description of the drawings

The invention will be explained more in detail by the enclosed drawings.
Figure 1 : Overall view and section of a decorative curved panel
Figure 1a : Detail relief and section of a decorative panel
Figure 2 : Top view with markings
Figure 3 : Curved panel in moulding press
Figure 4 : Laser cutting of curved panel
Figure 5 : Surface treatment with laser
Figure 6 : Treatment with a pressure roll
Figure 7 : Positioning with reference markings
Figure 8 : Positioning with cameras
Figure 9 : Pressing mould halve with relief structure
Figure 10 : Pressing mould halve with pins
Figure 11 : Curved panel provided with boreholes
Figure 12 : Pressing mould halve with holes for bolts
Figure 13 : Detail view of a panel with bolt

### Description of the preferred embodiments of the invention

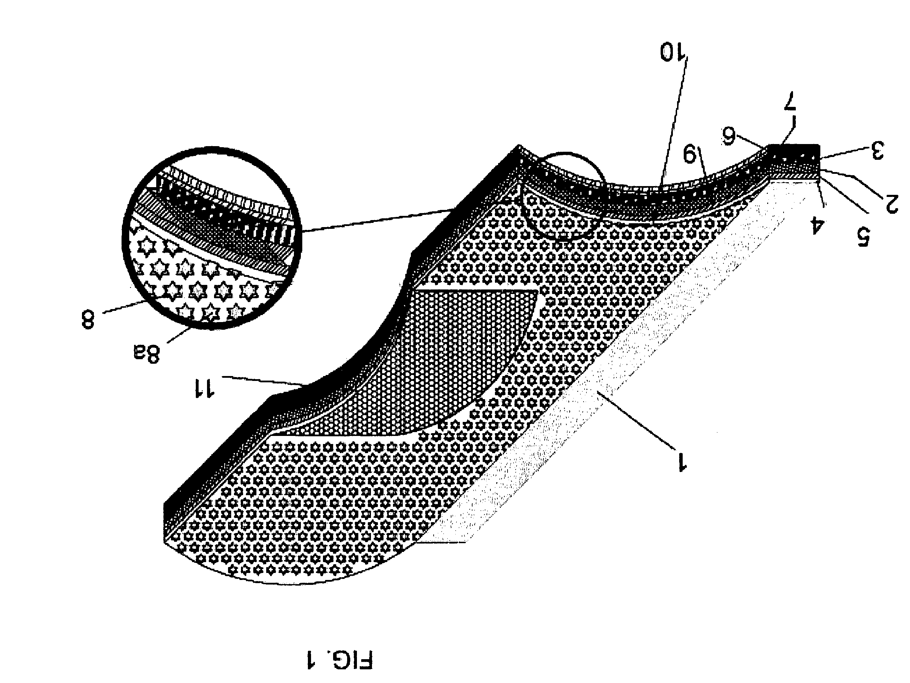

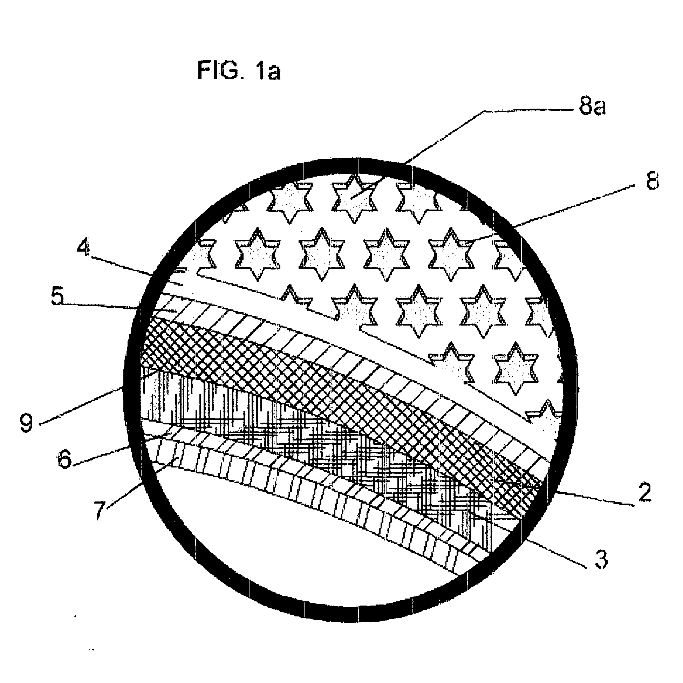

Referring to fig.1 the panel(1) consists of a core layer(9) with at least one fibrous layer(2,3). These fibres can be of natural or synthetic origin or made of metal, glass, composites, Kevlar, viscose,...etc. Natural fibres according to this invention are jute, flax, sisal, cotton, bamboo, wood, cellulose,... or combinations of the abovementioned materials. Obviously, fibres made from other materials could be considered as part of the invention.
Different core layers(2,3) can be treated selectively with at least one resin. In this invention a thermo-hardening resin or a combination of resins such as urea, melamine, acrylics, furans, furfuryl alcohols,...etc can be used.

As shown in fig.1a, at least one top layer(4) and at least one bottom layer(7) can cover the fibrous core layer(9). A number of intermediate layers(5,6) can be applied between the fibrous core layer(9) and the top(4) or bottom layer(7), as well as between a number of core layers(2,3). The layers(4,5,6,7) can be made of paper, textiles, glass fibre cloth, polymers,...etc or a combination of these materials. Here again, no restriction is made of materials in the framework of the invention. These materials can be mixed with particles, such as aluminium oxide or similar compounds in order to improve the scratch and impact resistance. Preferable, compounds to improve the fire-resistant or the water repellent properties of the layers can be additionally added. At least one layer(4,5,6,7) can be provided with a pattern(8a) and optionally with a relief structure(8). According to the three-dimensional profile(10,11) of the laminated structure(2,3,4,5,6,7) as shown in fig.1, a computer model enables to design the preferred structure.

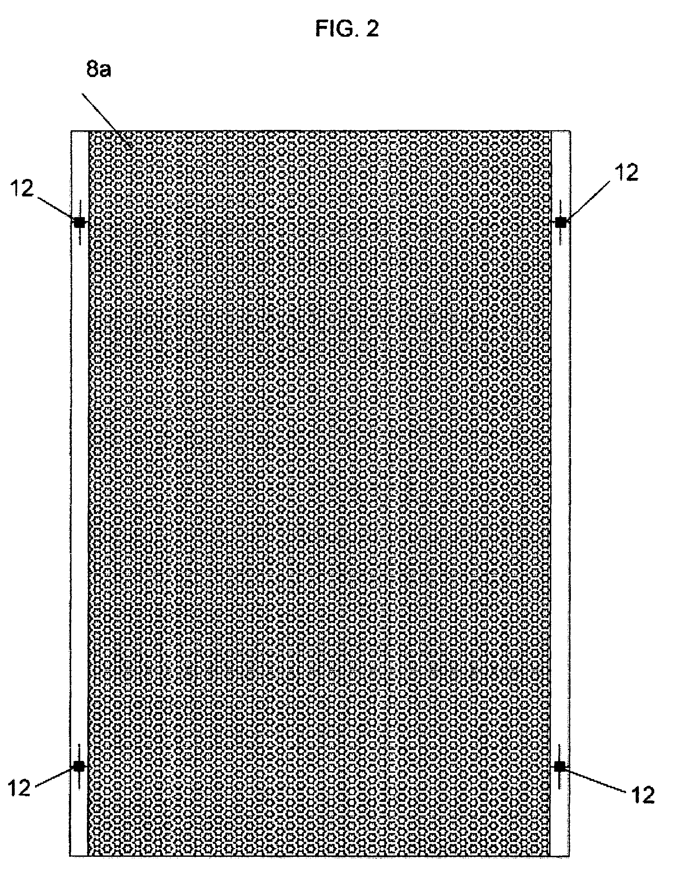

Fig.2 illustrates the layer with a pattern(8a) and predetermined markings(12) in order to position the panel according to the press mould halves(13,13a) of the mould press (15,16).

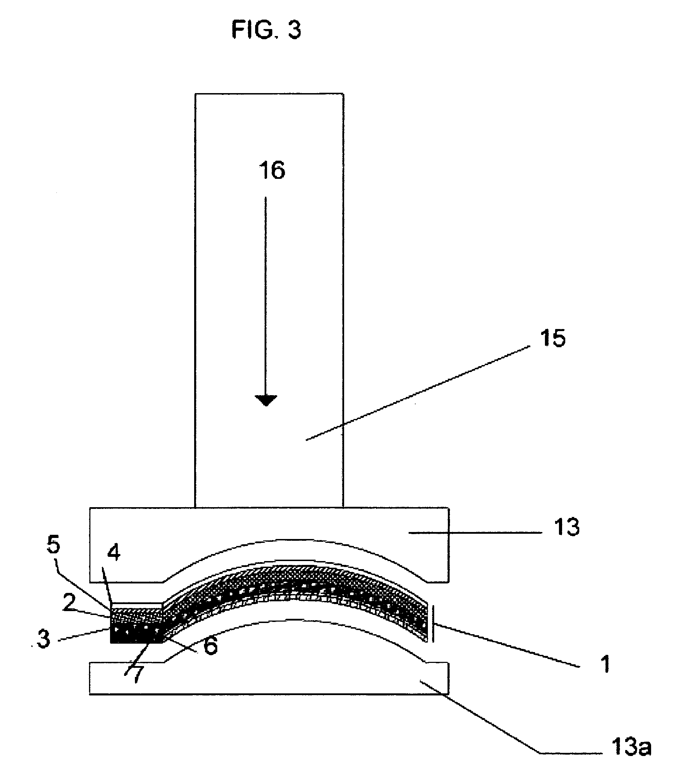

The different layers(2,3,4,5,6,7) are positioned between the press mould halves(13,13a) and will be pressed to the requested shape, preferable resulting in a decorative curved panel(1), according to fig.3. As already mentioned, a relief structure(8) can optionally be applied preferable matching with a predetermined pattern(8a) before, during or even after the moulding process.

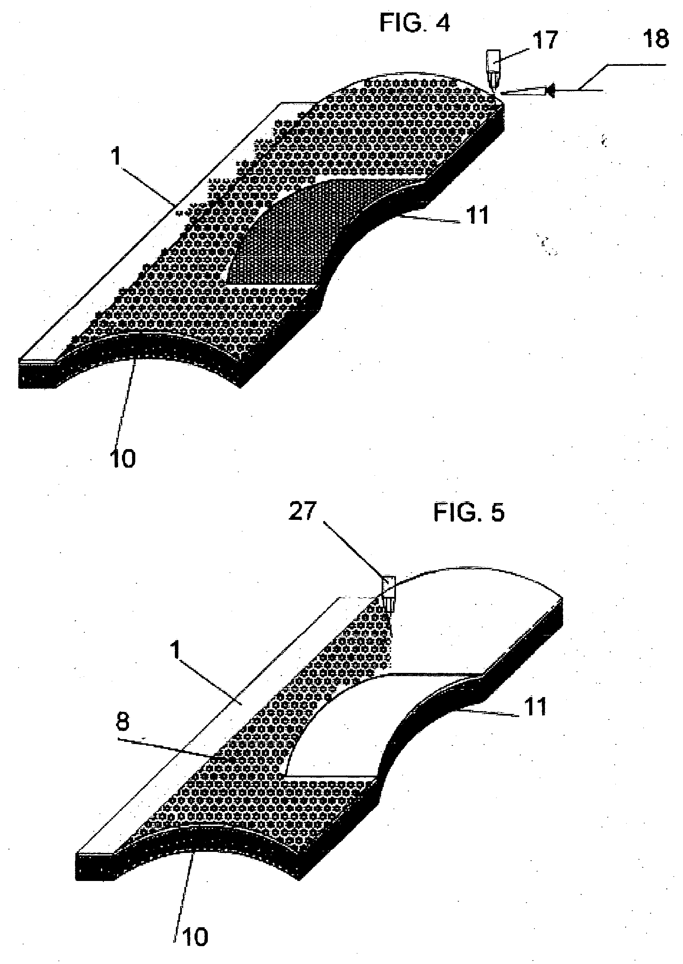

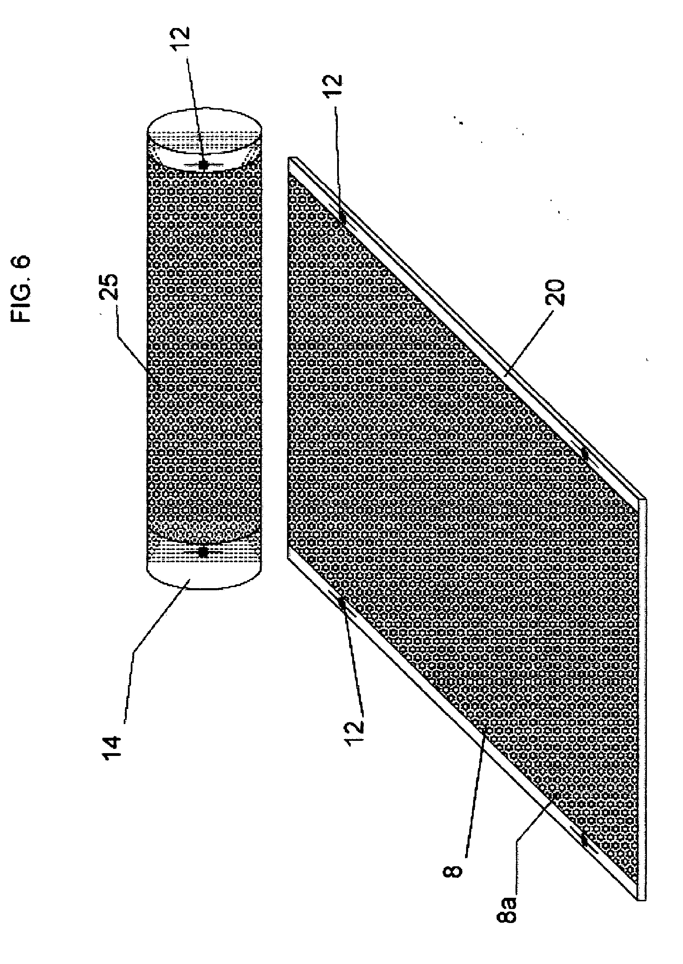

The relief structure(8) can be applied by a heated press roll(14), according to fig.6, or by a laser treatment(27), according to fig.5.

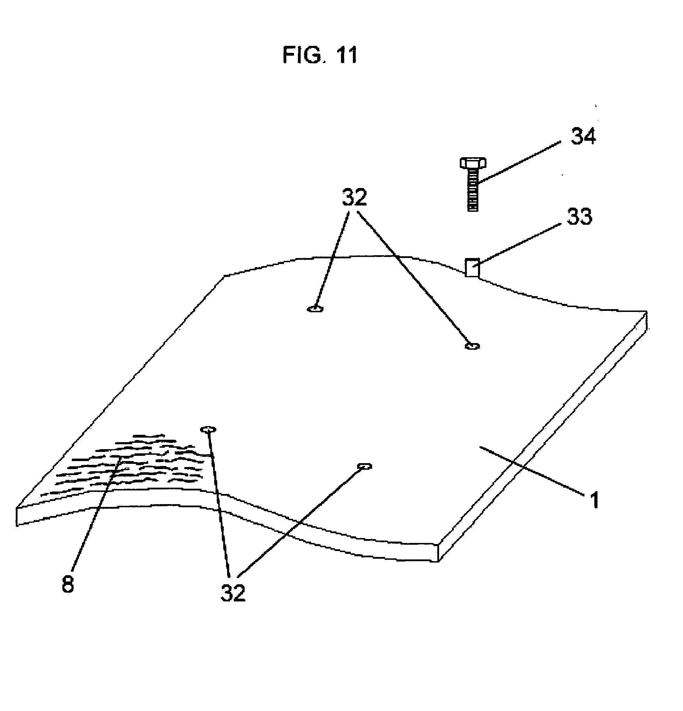

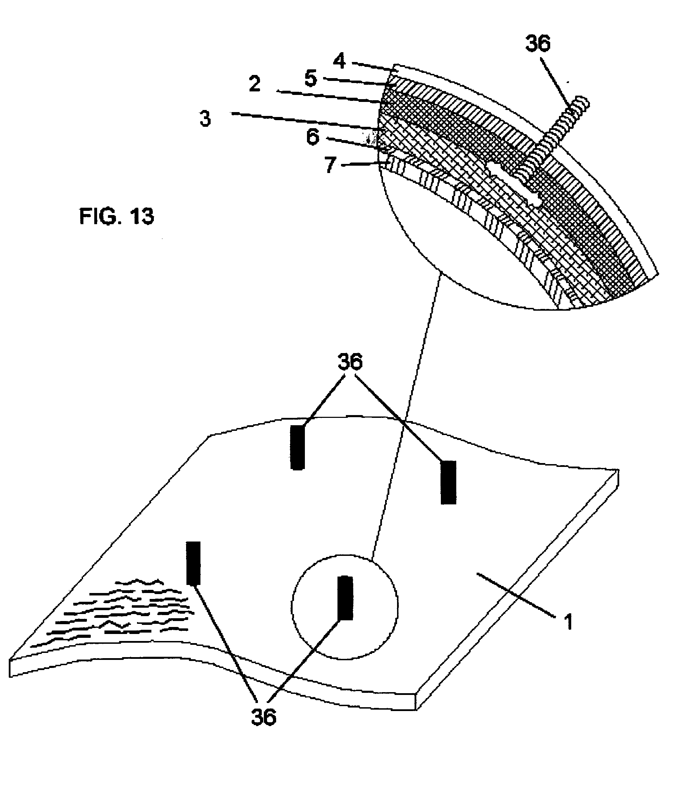

In order to provide fixing plugs(33) in which screws or bolts(34) can be inserted, holes(32) can be provided in the panel(1). This is illustrated in fig.11. Alternatively, bolts(36) can be implemented in the different layers(2,3,4,5,6,7) during the composing process, according to fig.13.
Due to these fastening means, like the plugs(33) and/or bolts(34,36), the panel(1) can be mounted to other structures.

The invention also concerns a method of the manufacturing of a decorative curved panel(1).
The manufacturing process comprises a number of steps :
i. Composing the shape and the dimensions of the core layers(2,3)
ii. Preparing selectively the top, the bottom and/or intermediate layers(4,5,6,7)
iii. Integrating and positioning the different layers (2, 3, 4, 5, 6, 7) and bending the laminate between the mould halves(13,13a)
iv. Optionally, realize the relief structure (8) during, before and after the pressing process
v. Optionally, an after treatment of the shaped panel(1) in order to obtain the requested dimensions

Following, the foregoing process steps will be explained more in detail.
A first step comprises the composition of at least one fibrous core layer(2,3) and the addition of at least one thermo-hardening resin. A computer model calculates the thickness and its density, based on a three-dimensional model. The supply of the resins can be done by known techniques such as impregnation or sprinkling. Before, during or after the drying process, other treatments like the addition of fireproof compounds, water repellent compounds, rolling-up, cutting,... could be applied.

On the top, bottom or intermediate layers(4,5,6,7) a pattern(8a) can be provided by known printing techniques such as, but not limited to, rotary printing, digital printing,...etc .
According to the calculated computer model, as mentioned above, the digital image will be printed with respect to shape of the panel(1). In order to position the layers(2,3,4,5,6,7) between the mould halves(13,13a) of the press mould(15,16), marks(12) could be provided. These marks(12) could be added during the printing process of the pattern(8a).

The laminate(2,3,4,5,6,7) is inserted between the press mould halves(13,13a). The bending process under a specific pressure, temperature and timing, according to the characteristics of the used materials, will be continued. At least one press mould halve(13,13a) has a curved shape in order to bend the laminate(2,3,4,5,6,7). At least one mould consists of a hollow frame(22,23) and a curved surface(24), in which a heated fluid can circulate. In another embodiment, the press mould halves(13,13a) consist of a solid frame(22,23) that is heated conventionally, such as electrical bars, electrical mat,...etc. Anyway, known techniques in order to heat up the mould will be included in the present invention.

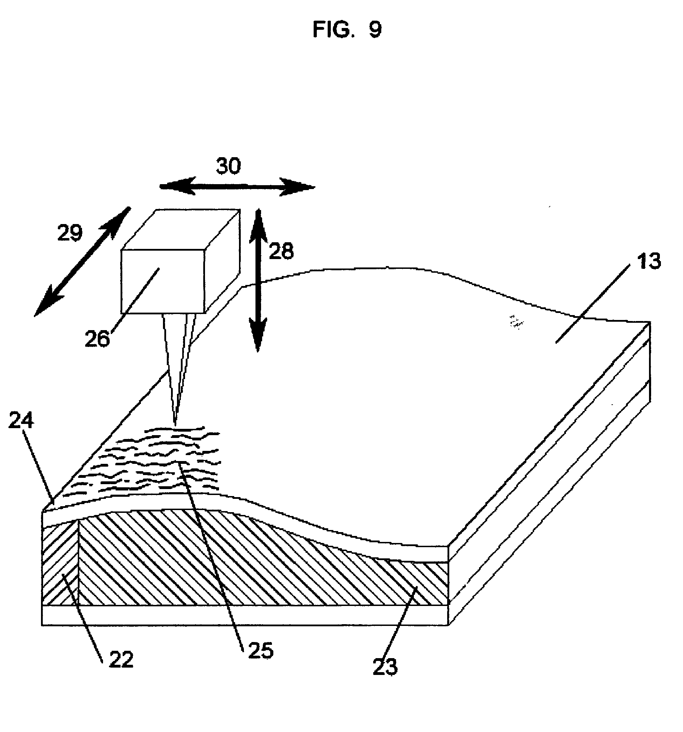

Optionally, a relief structure(8) can be applied to at least one of the outer layers, preferable matching with the pattern(8a), according to the surface of the mould halve(13,13a).
At least one mould halve(13,13a) can be provided with a relief structure(25), which can applied with a known technology such as etching, engraving, laser or milling. This relief(25) will be pressed in the panel(1). Preferable, the relief(25) will be applied to at least one press halve(13,13a) with a laser scanner(26). This kind of laser is known as a remote welding tool.
The method consists of creating an locally elevation on the surface of the mould halve (13.13a) by heating up locally the metal by the laser (26). This elevation depends in width and in height on the feed speed and the power of the laser (26).
Basically, the laser scanner(26) is mounted on a frame(28,29,30) such as indicated on fig.9. Three dimensional freedom, allows us to heat up locally the mould halves(13,13a) selectively in order to create the preferred relief structure. Preferable, this treatment is controlled by an adapted computer software.

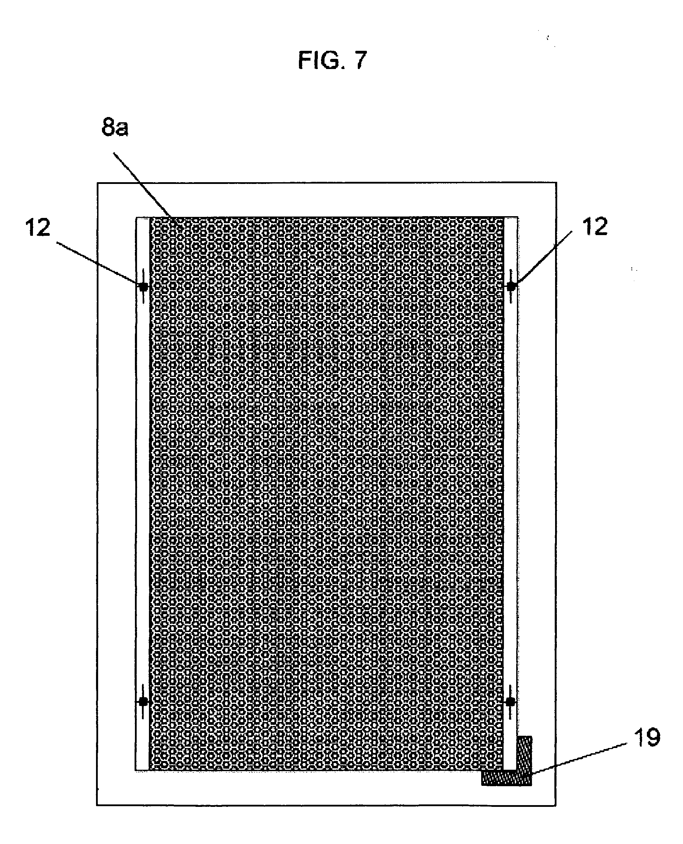

As already mentioned before, the precise positioning of the laminate(2,3,4,5,6,7) in the press mould is very important.
Basically, according to fig.7, a reference point(19) in the press mould(15,16) allows us to place the laminated panel(2,3,4,5,6,7) exactly between the mould halves(13,13a) with the goal to match the relief surface(25) of at least one mould halve(13,13a) with the pattern(8a) of the laminated structure(2,3,4,5,6,7).

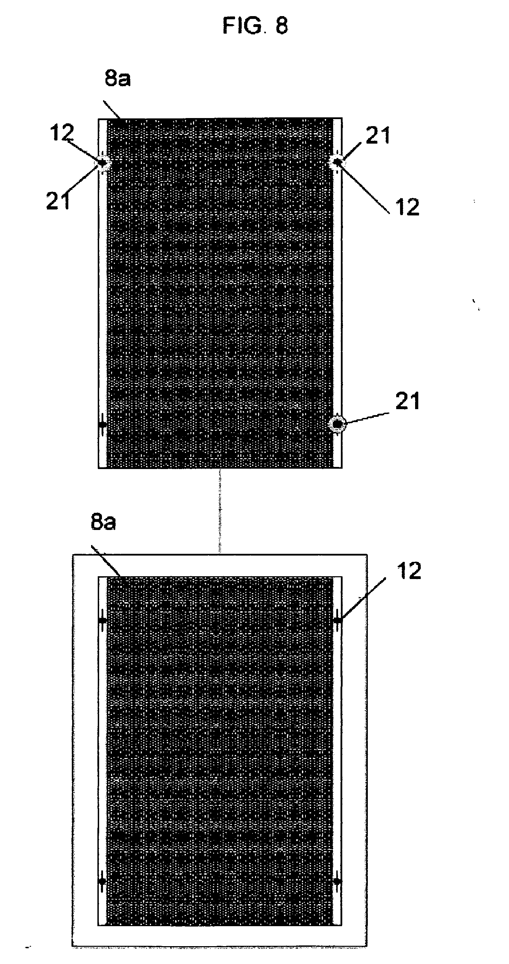

Alternatively, printed markings(12) on the outer layers of the laminated structure(2,3,4,5,6,7) enables to place it automatically on the requested position in the press mould(15,16) with optical detection means(21). Such an optical detection system(21), according to fig.8, is for example a camera, that can read the markings (12) on the laminated structure(2,3,4,5,6,7).

In another embodiment of the present invention, the relief structure(8) will be applied before the bending process in the press mould(15,16). Fig.6 illustrates the laminated structure(2,3,4,5,6,7)moving under a heated press roll(14). This press roll(14) is provided with a relief(25). Here again, regarding the composition of the laminated structure(2,3,4,5,6,7), the press characteristics of the press roller(14), such as speed and temperature will be adapted. The result is a flat panel (20) with a relief structure (8). Subsequently, the flat panel (20) is bent using at least one pressing halves (13,13a) without relief structure (8).

Another embodiment of the present invention is that, after the bending process in the mould press(15,16) with pressing halves (13,13a) without relief, a surface laser(27) will be used to create a preferred relief structure(8), like shown in fig.5.
Here again, the laser in mounted on a frame, targeted to treat the laminated structure(2,3,4,5,6,7) and controlled by computer software. Preferable, a ventilating and/or filtering device(18), as illustrated in fig.4 can be used in order to exhaust the fumes.

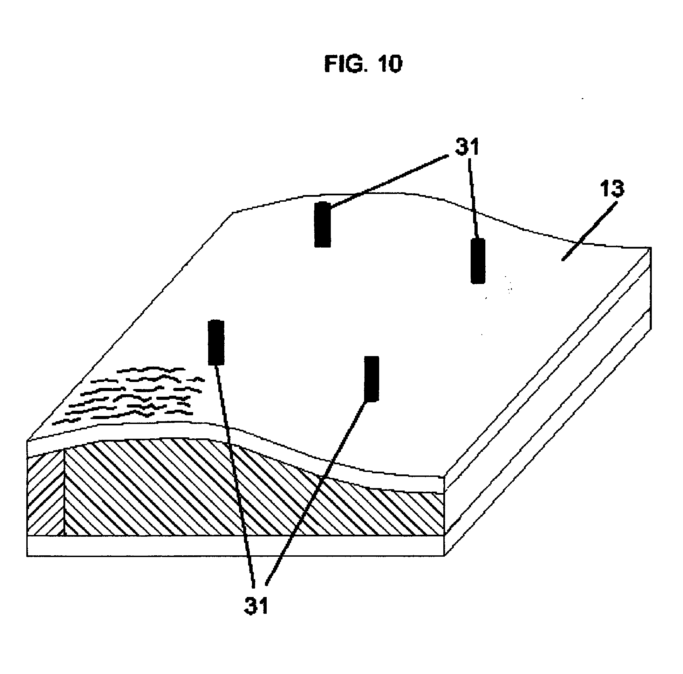

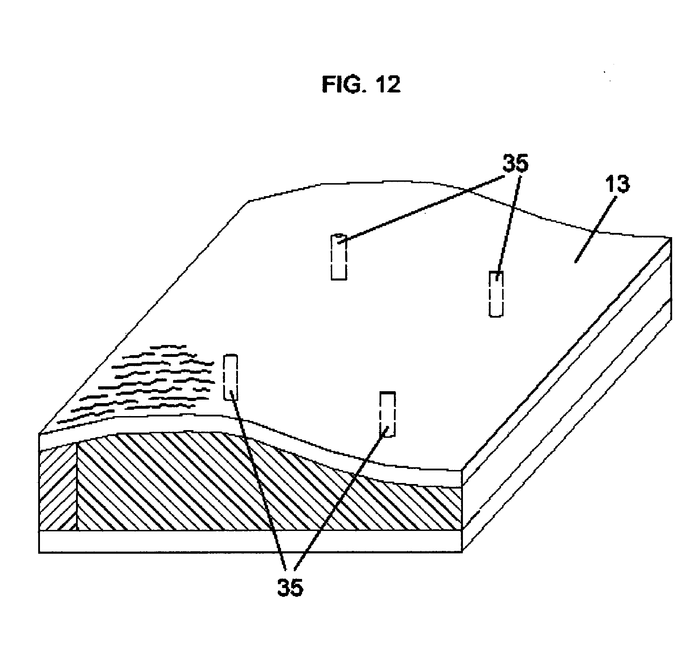

Fig.10 and 11, illustrates another embodiment of the present invention in which, at least one press mould halve(13,13a), is provided with pins(31) in order to pierce the laminated structure(2,3,4,5,6,7) during the press process.
Alternatively, the laminated structure(2,3,4,5,6,7) can be provided with bolts(36), according to the fig.12 and 13. These bolts(36) can be set in the laminated structure during its composition. With respect to the position of these bolts(36), during the press process in the press mould(15,16) the press mould halves(13,13a) can be provided with borings(35), exactly matching with the bolts(36). During the press process, the bolts(36) will be anchored in the curved panel(1).
Finally, a further after treatment of the curved panel(1) can be achieved. Fig.4 shows a laser(17) in order to cut the curved panel. Again, the laser(17) can be moved on a frame and controlled by computer software. A ventilating and/or filtering device(18) can additionally be provided.

## Claims

1. A layered panel(1), consisting of a core layer(9), comprising at least one fibrous layer(2,3), at least one top layer(4), at least one bottom layer(7) and optionally intermediate layers(5,6) **and**
**characterised in that** the panel(1) is curved with a decorative layer which is the top layer (4) and/or the bottom layer (7).

2. A decorative layered panel(1) according to claim 1, **and characterised in that** the panel(1) is provided with a relief structure(8), preferable matching with a pattern(8a) in one of the layers(4,5,6,7).

3. A decorative layered panel(1) according to claim 1, **and characterised in that** the fibrous core layer(2,3) is treated with thermo-hardening resins.

4. A decorative layered panel(1) according to claims 1 and 3 **and characterised in that that** fibrous core consists of several core layers(2,3) in order to determine the characteristics of the preferred panel(1).

5. A decorative layered panel(1) according to one of the previous claims **and characterised in that** the fibrous core layer(2,3) is made of different fibres.

6. A decorative layered panel(1) according to claim 1-2 **and characterised in that** the top, bottom and intermediate layers (4,5,6,7) are composed of natural or synthetic material, optionally treated with thermo-hardening resins.

7. A decorative layered panel(1) according to claims 1-5 **and characterised in that** the core layer(9) can be constructed based on a three dimensional profile(10,11), with selective thickness and/or density.

8. A decorative layered panel(1) according to claim 7 **and characterised in that** the three-dimensional profile(10,11) is constructed by a computer model.

9. A decorative layered panel(1) according to claims 1-8 **and characterised in that** the addition of particular compounds to the layers(2,3,4,5,6,7) enhances the fire-resistance and/or the water repellence and/or the scratch resistance.

10. A decorative layered panel(1) according to claims 1-9 **and characterised in that** the panel(1) is provided with holes(32).

11. A decorative layered panel(1) according to claim 10 and **characterised in that** the panel is provided with fixing plugs(33) and screws or bolts(34).

12. A method for the manufacture of a curved (decorative weggelaten ??) layered panel(1) consisting of the following steps :
i. Composing the shape and the dimensions of the core layers (2,3)
ii. Preparing selectively the top, the bottom and/or intermediate layers(4,5,6,7)
iii. Integrating and positioning the different layers(2,3,4,5,6,7) and bending the laminate between the mould halves(13,13a) and optionally adding the relief structure(8) according to the mould halves (13, 13a)
iv. Optionally, realize the relief structure (8) during, before and after the pressing process
v. Optionally, an after treatment of the shaped panel(1) in order to obtain the requested dimensions

13. A method for the manufacturing of a curved decorative layered panel(1) according to claim 12 **and characterised in that** the core layer(9) consists of at least one fibrous layer(2,3), is constructed, based on the a three-dimensional profile.

14. A method for the manufacturing of a curved decorative layered panel(1) according to the claims 12-13 **and characterised in that** the fibrous core layer(2,3) is treated with thermo-hardening resins.

15. A method for the manufacturing of a curved decorative layered panel(1) according to claims 13-14 **and characterised in that** the fibrous core layer(2,3) can be rolled-up and cut.

16. A method for the manufacturing of a curved decorative layer panel(1) according to claims 12-15 **and characterised in that** the addition of particular compounds to the layers(2,3,4,5,6,7) enhances the fire-resistance and/or the water repellence and/or the scratch resistance.

17. A method for the manufacturing of a curved decorative layered panel(1) according to claims 12-16 **and characterised in that** at least one of the layers(4,5,6,7) is provided with a printed pattern(8a).

18. A method for the manufacturing of a curved decorative layered panel(1) according to claims 12-17 **and characterised in that** markings(12) are added in order to position the layered structure(2,3,4,5,6,7) in the press mould(15,16).

19. A method for the manufacturing of a curved decorative panel(1) according to claims 17-18 **and characterised in that** a computer model constructs a digital pattern(8a).

20. A method for the manufacturing of a curved decorative panel(1) according to claims 12-19 **and characterised in that** the layered structure(2,3,4,5,6,7) is positioned between the press mould halves(13,13a) in order to bend according to the characteristics of the mould halves(13,13a) and controlling the moulding parameters according to the properties of the layered structure(2,3,4,5,6,7).

21. A method for the manufacturing of a curved decorative panel(1) according to claim 20 **and characterised in that** the parameters are temperature, pressure and process time.

22. A method for the manufacturing of a curved decorative panel(1) according to claims 20-21 **and characterised in that** at least one mould halve(13,13a) is provided with a relief structure(25) and is heated.

23. A method for the manufacturing of a curved decorative panel(1) according to claim 22 **and characterised in that** at least one mould halve(13,13a) is provided with pins(31)

24. A method for the manufacturing of a curved decorative panel(1) according to claim 22 **and characterised in that** at least one mould halve(13,13a) is provided with borings(35).

25. A method for the manufacturing of a curved decorative panel(1) according to claims 22-24 **and characterised in that** the relief structure(25) of surface of the mould halve(13,13a) is applied by a laser scanner(26).

26. A method for the manufacturing of a curved decorative panel(1) according to claims 12-25 **and characterised in that** relief structure(8) is applied in order to match with the printed pattern(8a).

27. A method for the manufacturing of a curved decorative panel(1) according to claim 26 **and characterised in that** the relief structure(8) is applied with at least one press mould halve(13,13a) during the bending process.

28. A method for the manufacturing of a curved decorative panel(1) according to claims 12-27 **and characterised in that** the layered structure(2,3,4,5,6,7), provided with markings(12), is positioned between the press mould halves(13,13a) with optical detection means(21).

29. A method for the manufacturing of a curved decorative panel(1) according to claim 27 **and characterised in that** the layered structure(2,3,4,5,6,7) is positioned between the press mould halves(13,13a) according to a reference point(19).

30. A method for the manufacturing of a curved decorative panel(1) according to claim 26 **and characterised in that** the relief structure(8) is applied with a heated press roll(14) before the bending process.

31. A method for the manufacturing of a curved decorative panel(1) according to claim 26 **and characterised in that** the relief structure(8) is applied selectively after the bending process by a surface laser(27).

32. A method for the manufacturing of a curved decorative panel(1) according to claims 12-31 **and characterised in that** holes(32) are pierced in the laminated structure(2,3,4,5,6,7) during the moulding process.

33. A method for the manufacturing of a curved decorative panel(1) according to claim 32 **and characterised in that** fixing plugs(33) and screws or bolts(24) are anchored during the moulding process.

34. A method for the manufacturing of a curved decorative panel(1) according to claims 12-33 **and characterised in that** the curved panel(1) can be cut by laser in relation to the preferred dimensions.

35. A method for the manufacturing of a curved decorative panel(1) according to claims 25, 31 **and** 34 **and characterised in that** the laser is mounted on a frame(28,29,30) in order to have a three dimensional freedom and controlled by computer software.

36. A method for the manufacturing of a curved decorative panel(1) according to claim 35 **and characterised in that** the laser is provided with filtering and/or ventilating means(18).
